Europäisches Patentamt

European Patent Office

Office européen des brevets

(19)

(11) Veröffentlichungsnummer: **0 492 620 A1**

# (12) EUROPÄISCHE PATENTANMELDUNG

(21) Anmeldenummer: **91122216.4**

(22) Anmeldetag: **24.12.91**

(51) Int. Cl.5: **A01D 43/04**, A01D 43/10, A01B 51/04

(30) Priorität: **28.12.90 DE 4042158**

(43) Veröffentlichungstag der Anmeldung:
**01.07.92 Patentblatt 92/27**

(84) Benannte Vertragsstaaten:
**AT CH DE FR GB LI NL**

(71) Anmelder: **Maier, Helmut**
**Maierhof**
**W-7318 Lenningen-Schopfloch(DE)**
Anmelder: **Maier, Friedrich**
**Maierhof**
**W-7318 Lenningen-Schopfloch(DE)**

(72) Erfinder: **Maier, Helmut**
**Maierhof**
**W-7318 Lenningen-Schopfloch(DE)**
Erfinder: **Maier, Friedrich**
**Maierhof**
**W-7318 Lenningen-Schopfloch(DE)**

(74) Vertreter: **Haug, Dietmar et al**
**Patentanwälte Andrae, Flach, Haug, Kneissl**
**Balanstrasse 55**
**W-8000 München 90(DE)**

(54) Verfahren zum Ernten von Bodengewächs und Vorrichtung zur Durchführung des Verfahrens.

(57) Ein Verfahren zum Ernten von Bodengewächs, bei dem das Bodengewächs mit einem fahrbaren Mäher (2) gemäht und dann mittels einem Verstreuer bzw. Heuer (5) verstreut wird, ist so weiterzubilden, daß das Bodengewächs effektiver und mit geringerem Aufwand geerntet werden kann. Dies wird dadurch erreicht, daß der Heuer (5) hinter dem Mäher (2) gezogen sowie vom Mäher (2) angetrieben wird und das gemähte Bodengewächs hinter dem Mäher (2) in einem Arbeitsgang der gebildeten fahrbaren Einheit verstreut wird. Die Erfindung bezieht sich auch auf eine Vorrichtung zur Durchführung des Verfahrens.

Fig. 1

EP 0 492 620 A1

Die Erfindung bezieht sich auf ein Verfahren und eine Vorrichtung nach dem Oberbegriff des Anspruchs 1 bzw. 7.

Bei üblichen Verfahren zum Grasernten werden vorzugsweise Kreiselmäher eingesetzt, die von einem Schlepper gezogen und angetrieben sowie in der jeweils erforderlichen Arbeitshöhe justiert werden. Nach dem Mähen des Grases wird der Kreiselmäher vom Schlepper gelöst und es wird vorzugsweise ein Kreiselheuer am Schlepper befestigt, der bei einem zweiten Arbeitsgang des Schleppers das gemähte Gras verstreut.

In vergleichbarer Weise ist es auch üblich, gemähtes Gras bei einem zweiten Arbeitsgang mittels einem sogenannten Knickzetter zu knicken, der nach dem Mähen anstelle des Kreiselmähers an den Schlepper angebaut wird. Es sind jedoch auch schon Vorrichtungen zum Knicken bzw. Aufbereiten des Grases bekannt, die in einem Kreiselmäher integriert sind. Das Knicken des Grases erfolgt dabei im Bereich der rotierenden Kreisel des Kreiselmähers. Es ist auch schon bekannt, für eine solche Mäh/Knick-Vorrichtung am vorhandenen Dreipunktbock des Kreiselmähers einen zusätzlichen Zapfwellenanschluß vorzusehen, an die ein geeignetes Antriebselement für die integrierte Knickvorrichtung anschließbar ist.

Bei beiden bekannten Maßnahmen ist das Heuen bzw. Knicken des Grases zeit- und arbeitsaufwendig, weil zum einen jeweils ein zweiter Arbeitsgang erforderlich ist und zum anderen jeweils der Kreiselmäher durch einen Heuer bzw. Knickzetter und umgekehrt auszutauschen ist.

Der Erfindung liegt die Aufgabe zugrunde, ein Verfahren oder eine Vorrichtung der eingangs angegebenen Arten so weiterzubilden, daß das Bodengewächs effektiver und mit geringerem Aufwand geerntet werden kann.

Diese Aufgabe wird durch die Merkmale des Anspruchs 1, 3 oder 7 gelöst.

Bei den erfindungsgemäßen Verfahren erfolgt das Verstreuen bzw. Knicken des Bodengewächses in einem Arbeitsgang beim Mähen, und zwar hinter dem Mäher mittels einer besonderen Heu- bzw. Knickvorrichtung, die hinter dem Mäher gezogen wird und deshalb gegen diesen nicht ausgetauscht zu werden braucht. Aufgrund der Arbeitsweise in einem Arbeitsgang wird die Leistungsfähigkeit etwa verdoppelt, und außerdem wird der Arbeitsaufwand zum Einrichten des Mähers wesentlich vereinfacht, weil ein Austausch zwischen dem Mäher und der Heu- bzw. Knickvorrichtung nicht erforderlich ist.

Die erfindungsgemäßen Vorrichtungen zeichnen sich durch einfache, kostengünstig herstellbare und funktionssichere Bauweisen aus, die ferner gegebenenfalls ein handhabungsfreundliches Anbringen am Mäher ermöglichen.

Vorteilhafte Weiterbildungen der Erfindung, die das Mähen verbessern und insbesondere ein Heuen im Abstand des stehengebliebenen Bodengewächses ermöglichen und außerdem eine einfache, stabile und funktionstüchtige Konstruktion ergeben, die auch ein seitliches Schwenken des Heuers bzw. der Knickvorrichtung ermöglichen, sind in den Unteransprüche beschrieben.

Nachfolgend wird die Erfindung anhand eines bevorzugten Ausführungsbeispiels und einer Zeichnung näher erläutert. Es zeigen

Figur 1 eine erfindungsgemäße Vorrichtung zum Mähen und Verstreuen bzw. Heuen von insbesondere Gras in der Draufsicht;

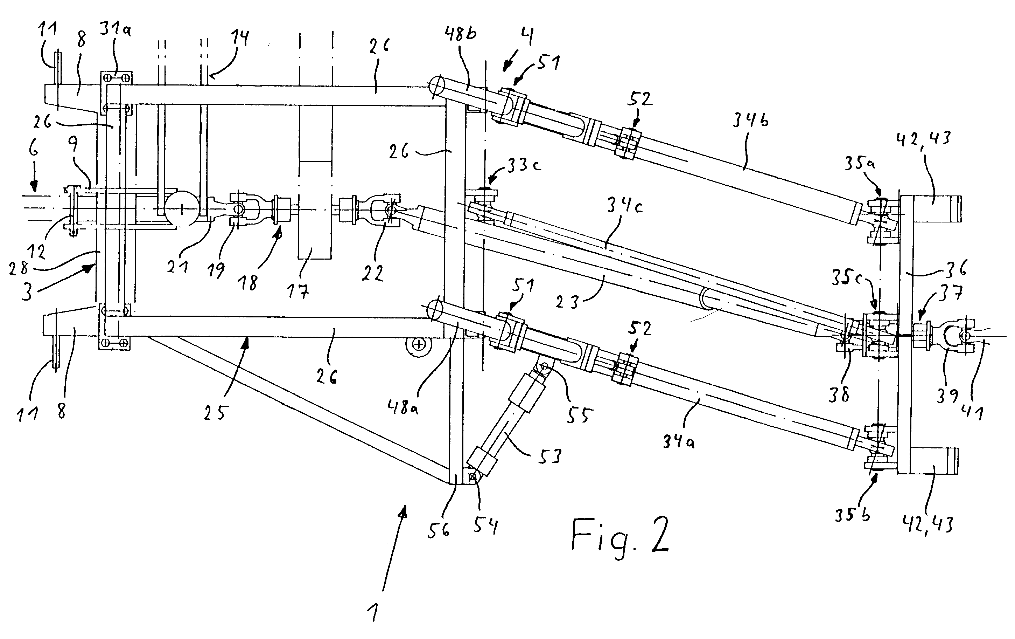

Figur 2 die Vorrichtung in der Draufsicht und in vergrößerter Darstellung;

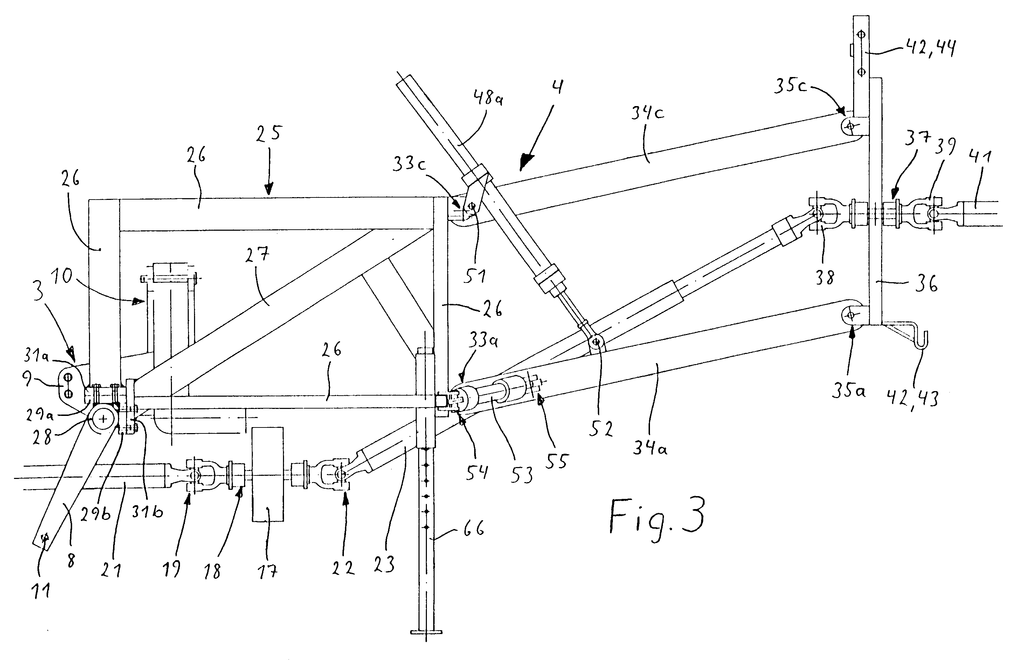

Figur 3 die Vorrichtung in der Seitenansicht; und
Figur 4 einen hydraulischen Steuerplan;
Figur 5 eine erfindungsgemäße Vorrichtung zum Mähen und Knicken bzw. Aufbereiten von insbesondere Gras in der Draufsicht.

Die Hauptteile der Vorrichtung 1 sind ein Kreiselmäher 2 mit einem Dreipunktbock 3, eine dem Dreipunktbock 3 rückseitig zugeordnete Tragkonstruktion 4 für einen am hinteren Ende der Tragkonstruktion 4 befestigbaren Kreiselheuer 5 und ein Antriebs-Gelenkwellenzug 6, der ausgehend vom Dreipunktbock 3 sich nach hinten über das Hinterende der Tragkonstruktion 4 hinaus zum Kreiselheuer 5 hin erstreckt.

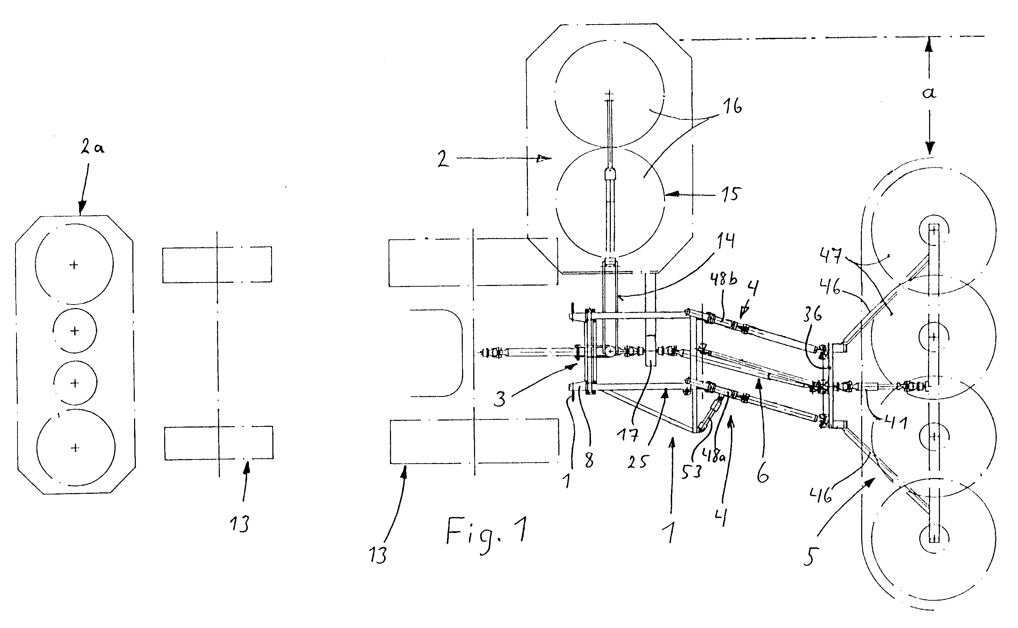

Der Dreipunktbock 3 weist an seiner Vorderseite zwei seitliche, sich schräg nach unten erstreckende Stützschenkel 8 und ein im mittleren Bereich angeordnetes Jochpaar 9 auf, wobei die Stützschenkel 8 im Bereich ihrer unteren Enden mit Querachsen 11 die unteren seitlichen Tragpunkte und das Jochpaar 9 mit einem Tragbolzen 12 den oberen mittleren Tragpunkt einer Dreieck-Aufhängung bilden, mit der der Dreipunktbock 3 an seiner Vorderseite an einem nur in Figur 1 mit seinen Rädern andeutungsweise dargestellten Schlepper 13 befestigt und getragen werden kann. Vom vorderen Bereich des Dreipunktbocks 3 erstreckt sich ein Tragarm 14 zu einer Seite hin mit einem nicht dargestellten, an einem aufrechten Stützarm 10 des Dreipunktbocks 3 abgestützten Oberlenker, der das Mähwerk 15 mit zwei Mähkreiseln 16 höhenverstellbar trägt. Der Antrieb für die Höhenverstellung ist aus Vereinfachungsgründen nicht weiter bezeichnet.

Hinter dem Tragarm 14 erstreckt sich vom Dreipunktbock 3 zur gleichen Seite hin ein Antriebselement 17 für das Mähwerk 15, wobei es sich um einen Riementrieb handeln kann. Im Bereich des Antriebselements 17 ist ein mittig drehbar gelagerter Wellenstummel 18 vorgesehen, dessen vorderes Ende an ein teleskopierbares, sich vom Schlepper 13 nach hinten erstreckendes Kardan-Gelenkwellenteil 21 mit einem Wellengelenk 19 angeschlossen ist, und dessen hinteres Ende an ein sich nach hinten erstreckendes teleskopierbares Kardan-Gelenkwellenteil 23 mit einem Wellengelenk 22, vorzugsweise eine Weitwinkelgelenkwelle, angeschlossen ist. Bei dem Dreipunktbock 3 mit dem Wellenstummel 18 handelt es sich um ein dem Kreiselmäher 2 zugehöriges Bauteil.

Die Tragkonstruktion 4 besteht aus einem geschweißten Traggestell 25 in Form eines quaderförmigen Kastens mit im Bereich seiner Kanten horizontal, vertikal, sowie längs und quer verlaufenden Traggestellstäben 26, die mittels seitlichen, insbesondere vom vorderen unteren Eckenbereich zum hinteren oberen Eckenbereich sich erstreckende Streben 27 stabilisiert sind. Das Traggestell 25 kann lösbar oder unlösbar auf dem Dreipunktbock 3 befestigt sein, wobei es vorzugsweise verschweißt oder verschraubt ist. Bei der vorliegenden Ausgestaltung sind an einem horizontalen Querbalken 28 des Dreipunktbocks 3 obere horizontale und hintere vertikale Anschraubplatten 29a, 29b angeschweißt, die mit am Traggestell 25 im Bereich der vorderen unteren Ecken angeschweißten Anschraubplatten 31a, 31b mittels die Anschraubplatten durchfassenden Schrauben miteinander lösbar verschraubt sind.

Das Traggestell 25 überragt den Dreipunktbock 3 nach hinten.

An der Rückseite des Traggestells 25 sind nach hinten vorspringend drei Gelenke 33a, 33b, 33c ausgebildet, von denen zwei untere Gelenke 33a, 33b im Bereich der Ecken und ein oberes Gelenk 33c mittig angeordnet sind. In diesen Gelenken 33 sind drei Lenker 34a, 34b, 34c raumgelenkig gelagert, die sich von den Gelenken 33 nach hinten erstrecken und mit ihren hinteren Enden in vergleichbar angeordneten Gelenken 35a, 35b, 35c eines dreieckigen Tragrahmens 36 ebenfalls raumgelenkig gelagert sind, die sich an der Vorderseite des Tragrahmens 36 befinden. Von den drei Spitzen der dreieckigen Form des Tragrahmens 36 weisen zwei untere zur Seite hin und eine obere nach oben. Im mittleren Bereich des Tragrahmens 36 ist an einer geeigneten Strebe ein sich parallel zur Fahrtrichtung erstreckender Wellenstummel 37 drehbar gelagert, an dessen vorderem Ende das teleskopierbare Gelenkwellenteil 23 mit einem Wellengelenk 38 angeschlossen ist, und an dessen hinterem Ende ein flexibles Kardan-Gelenkwellenteil 41 mit einem Wellengelenk 39 angeschlossen ist, das sich nach hinten zum Antriebsgetriebe des Kreiselheuers 5 erstreckt, der mittels einer Dreipunktaufhängung 42 an der Rückseite des Tragrahmens 36 befestigbar ist. Die Dreipunktaufhängung 42 umfaßt zwei untere, in den zugehörigen Ecken des Tragrahmens 36 angeordnete Fanghaken 43 der Kategorie II nach DIN-Norm und einen oberen, im Bereich der oberen Ecke angeordneten U-Rahmen 44 mit Querbohrungen zum Einhängen eines Oberlenkers des Kreiselheuers 5, während in den Fanghaken 43 jeweils ein Unterlenker 46 eingehängt ist. Bei dem Kreiselheuer 5 handelt es sich um einen an sich bekannten Heuer mit vier, in Querrichtung nebeneinander angeordneten Streukreiseln 47.

Der Tragrahmen 36 ist mit den Lenkern 34 in den Gelenken 33 bzw. 35 sowohl horizontal als auch vertikal verschwenkbar, wobei die Lenker 34 parallelogrammartig eine immer gleiche, vorzugsweise vertikal und rechtwinklig zur Fahrtrichtung ausgerichtete Anordnung des Tragrahmens 36 gewährleisten. Zur vertikalen Verstellbarkeit des Tragrahmens 36 sind zwei Hydraulikzylinder 48a, 48b vorgesehen, die im Bereich der oberen Ecken des Traggestells 25 an von dessen Rückseite zurückstehenden Lageraugen 51 raumgelenkig gelagert sind und im mittleren Bereich der unteren Lenker 34a, 34b ebenfalls raumgelenkig in daran befestigten Lageraugen 52 angreifen.

Die Hydraulikzylinder 48a, 48b werden synchron betrieben, so daß sie gleichmäßig aus- und einfahren und Feststellelemente für die jeweilige vertikale Schwenkstellung bilden. Dabei können die Hydraulikzylinder 48a, 48b mit den Lenkern 34 horizontal schwenken.

Zur horizontalen Verstellung bzw. Verschwenkung des Tragrahmens 36 und der Lenker 34 ist ein weiterer Hydraulikzylinder 53 vorgesehen, der zwischen einem der unteren Lenker 34a, 34b und dem Traggestell 25 in Lageraugen 54, 55 ebenfalls raumgelenkig angelenkt ist. Bei der vorliegenden Ausgestaltung ist der doppelt (hin und her)-wirksame Hydraulikzylinder 53 an einer im unteren Bereich des Traggestells 25 seitlich auskragenden Konsole 56 mit dem Lagerauge 54 abgestützt, und greift am Lenker 34a befestigten Lagerauge 55 an, das sich in einem nach hinten gerichteten Abstand vom zugehörigen Gelenk 33a befindet.

Es ist im Rahmen der Erfindung möglich, insbesondere bei einer unlösbaren Befestigung der Tragkonstruktion 4 am Dreipunktbock 3 die Tragkonstruktion 4 fortwährend am Dreipunktbock 3 zu belassen und bei Bedarf den Kreiselheuer 5 am Tragrahmen 36 zu montieren bzw. zu demontieren, wobei die Ankupplung bzw. Entkopplung des Gelenkwellenteils 41 des Kreiselheuers 5 zu bewerkstelligen ist. Bei einer lösbaren Befestigung der Tragkonstruktion 4 auf dem Dreipunktbock 3 ist es möglich und vorteilhaft, den Anschluß des Kreiselheuers 5 am Tragrahmen 36 fortwährend zu belassen und bei Bedarf die Tragkonstruktion 4 bzw. das Traggestell 25 am Dreipunktbock 3 zu montieren bzw. zu demontieren, wobei in diesem Falle das Gelenkwellenteil 23 zu montieren bzw. zu demontieren ist. Die Gelenkwellenteile 23 sowie 41 und die Achsstummel 18, 37 weisen hierzu an sich bekannte Gelenkwellenverschlüsse auf, so daß sie von Hand leicht und schnell montiert bzw. demontiert werden können.

Durch die vertikale Verschwenkbarkeit des Tragrahmens 36 läßt sich die Arbeitshöhe des Kreiselheuers 5 einstellen und justieren bzw. manipulieren. Für die seitliche bzw. horizontale Erstellbarkeit läßt sich der Wirkbereich des Kreiselheuers bezüglich der durch den Schlepper 13 vorgegebenen Position wahlweise einstellen, wobei auch unterschiedlich breite Kreiselheuer 5 wahlweise eingestellt werden können. Vorzugsweise ist der Kreiselheuer 5 wenigstens etwa so breit wie der Kreiselmäher 2 bzw. dessen Mahd oder wie die Summe der Breite des seitlichen Kreiselmähers 2 und eines dem Schlepper 13 etwa mittig vorgeordneten Frontmähers 2a bzw. das über deren Mahden gemessene Maß.

Im Betrieb wird das Gras durch den Kreiselmäher 2 und den Frontmäher 2a geschnitten und hinter dem Kreiselmäher 2 durch den Kreiselheuer 5 verstreut. Um zu vermeiden, daß beim Verstreuen das Gras in den ungeschnittenen Bereich des Grases gelangen kann, ist es vorteilhaft, den Kreiselheuer 5 so einzustellen, daß er einen horizontalen Abstand a vom ungeschnittenen Gras aufweist. Deshalb verbleibt beim Mähen und Verstreuen des jeweiligen Arbeitsganges ein Streifen bzw. die entsprechende Mahd mit nicht verstreutem Gras unmittelbar neben dem geschnittenen Gras, der beim nächsten Arbeitsgang des so gebildeten Erntezuges verstreut wird, weil die durch den Versatz nicht verstreute Mahd beim folgenden Mähweg im Arbeitsbereich des Kreiselheuers 5 liegt und dann mit dem Teilstreifen dieses Mähweges gleichzeitig verstreut wird. Bei der letzten Mahd wird der Kreiselheuer 5 ganz nach rechts geschwenkt (ohne Abstand a) und damit der gesamte Schnitt gestreut.

Der Abstand des Kreiselheuers 5 zum Mähwerk 2 ist so bemessen, daß die Widerstandssicherung ohne Kollision mit dem Kreiselheuer 5 funktioniert, d.h., das Mähwerk 2 kann nach hinten ausklinken, wenn es auf einen harten Gegenstand (Grenzstein, Baumstumpf etc.) trifft.

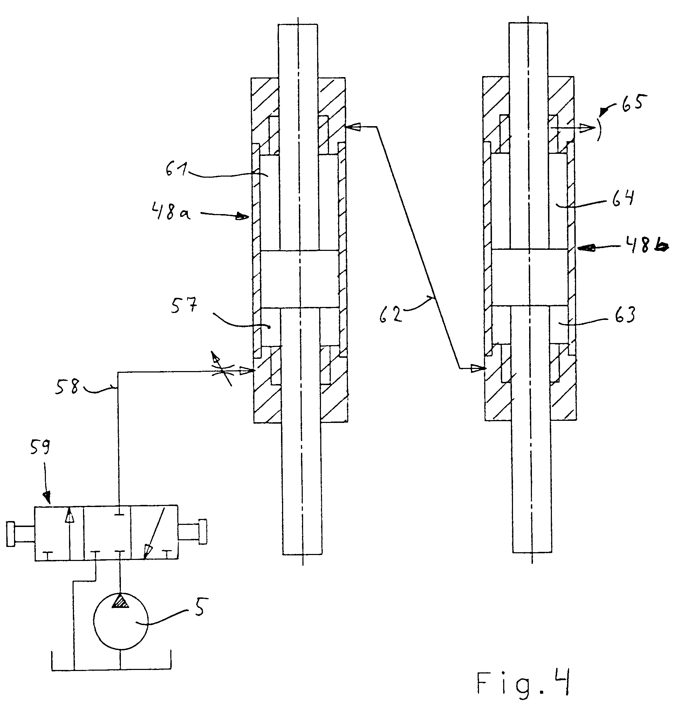

Um den Synchronlauf der Gleichgang-Hydraulikzylinder 48a, 48b zu erreichen, sind sie wie folgt hydraulisch angeschlossen (Figur 4). Der untere Kolbenraum 57 des ersten Zylinders 48a ist durch eine Schlauchleitung 58 mit einem einfach wirkenden Steuerventil 59, insbesondere ein 3/3-Wegeventil, mit einer Hydraulikpumpe 5 des Schleppers 13 verbunden. Der obere Kolbenraum 61 dieses Zylinders 48a ist durch eine Schlauchleitung 62 mit dem unteren Kolbenraum 63 des zweiten Zylinders 48b verbunden. Die Druckdifferenz des oberen Kolbenraumes 64 des zweiten Zylinders 48b wird über ein Lüftungsventil 65 ausgeglichen.

Beim Heben des Kreiselheuers 5 zum Transport und am Vorgewende wird der untere Kolbenraum 57 des ersten Zylinders 48a mit Drucköl beaufschlagt. Das Öl im oberen Kolbenraum 61 wird dadurch in den unteren Kolbenraum 63 des zweiten Zylinders 48b verdrängt, so daß der Kolben des zweiten Zylinders 48b synchron mit dem Kolben des ersten Zylinders 48a verschoben wird.

Außer Betrieb kann die Tragkonstruktion 4 durch eine am hinteren Ende des Traggestells 25 angeordnete, höhenverstellbare Standstütze 66 abgestützt werden, um das auf dem Dreipunktbock 3 wirksame Drehmoment abzufangen.

Es ist im Rahmen der Erfindung auch möglich, anstelle des Kreiselheuers 5 eine Knickvorrichtung vorzugsweise gleicher Breite anzudocken. Ein solcher sogenannter Knickzetter funktioniert hinsichtlich seines Wirkbereichs dem Kreiselheuer 5 entsprechend und kann ohne den Abstand a vom ungeschnittenen Gras gezogen werden. Eine solche Kombination aus Frontmähwerk 2a, Heckmähwerk 2 und nachgezogenem Knickzetter ermöglicht erstmals die Aufbereitung der gesamten Mahd, wobei der Knickzetter entsprechend breit zu bemessen ist.

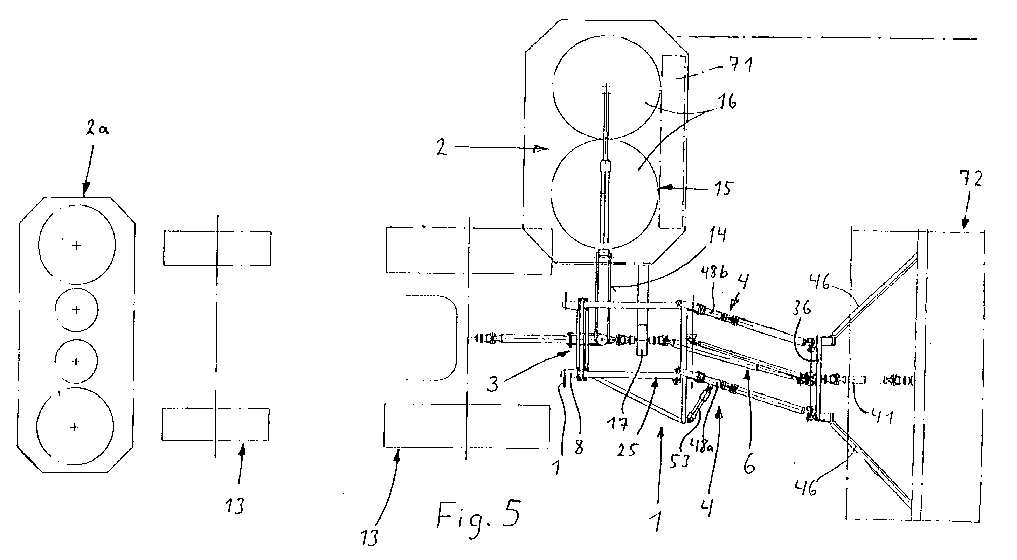

Bei der Ausgestaltung bzw. Anordnung nach Figur 5 ist ein seitlicher Heckmäher 2 mit einem integrierten, gegebenenfalls rückseitig angeordneten Knickzetter 71 vorgesehen, wobei anstelle des Kreiselheuers 5 ein mit entsprechenden Andock- und Antriebsverbindungselementen 41, 46 ausgerüsteter Knickzetter 72 am Träger 36 montiert ist, der die Mahd des Frontmähers 2a knickt bzw. aufbereitet. Dieser Knickzetter 72 braucht in seiner Breite nur der Breite des Frontmähers 2a bzw. der Breite der ihn verlassenden Mahd angepaßt zu sein.

**Patentansprüche**

1. Verfahren zum Ernten von Bodengewächs, insbesondere Gras, bei dem das Bodengewächs mit einem fahrbaren Mäher (2), insbesondere Kreiselmäher, gemäht und dann mittels einem Verstreuer bzw. Heuer (5), insbesondere einem Kreiselheuer, verstreut wird, **dadurch gekennzeichnet,** daß der Heuer (5) hinter dem Mäher (2) gezogen sowie vom Mäher (2) angetrieben wird und das gemähte Bodengewächs hinter dem Mäher (2) in einem Arbeitsgang der gebildeten fahrbaren Einheit verstreut wird.

2. Verfahren nach Anspruch 1, **dadurch gekennzeichnet,** daß der Heuer (5) gegenüber dem Mäher (2) so seitlich versetzt gezogen wird, daß ein seitlicher Abstand (a) zwischen dem ungemähten Bodengewächs und dem Heuer (5) besteht und das Bodengewächs im Bereich des durch diesen Abstand (a) vorgegebenen Streifens (57) beim nächsten Arbeitsgang der fahrbaren Einheit gleichzeitig mit einem Streifen des bei diesem Arbeitsgang gemähten Bodengewächses verstreut wird.

3. Verfahren zum Ernten von Bodengewächs, insbesondere Gras, bei dem das Bodengewächs mit einem fahrbaren Mäher (2), insbesondere einem Kreiselmäher, gemäht und dann mittels einer Knickvorrichtung geknickt bzw. aufbereitet wird, **dadurch gekennzeichnet**, daß die Knickvorrichtung hinter dem Mäher (2) gezogen sowie durch den Mäher (2) angetrieben wird und das gemähte Bodengewächs hinter dem Mäher (2) in einem Arbeitsgang der gebildeten fahrbaren Einheit durch die Knickvorrichtung aufbereitet wird.

4. Verfahren nach einem oder mehreren der vorhergehenden Ansprüche, **dadurch gekennzeichnet,** daß die fahrbare Einheit, insbesondere der Mäher (2), mit einem Schlepper (13) bzw. Traktor gezogen und angetrieben wird.

5. Verfahren nach Anspruch 4, **gekennzeichnet durch** die Verwendung eines vorzugsweise mittigen Frontmähers (2a) am Schlepper (13) zusätzlich zu einem vorzugsweise seitlichen Heckmäher (2).

6. Verfahren nach Anspruch 5, **gekennzeichnet durch** die Verwendung eines seitlichen Heckmähers (2) mit integrierter Knickvorrichtung (71) und einer hinter einem Tragbock (3) des Heckmähers (2) gezogener Knickvorrichtung (72).

7. Vorrichtung zur Durchführung des Verfahrens nach einem oder mehreren der vorhergehenden Ansprüche, mit einem Mäher (2), insbesondere Kreiselmäher, bestehend aus einem Tragbock (3) und einem von diesem seitlich abstehenden Mähwerk (15), **dadurch gekennzeichnet**, daß rückseitig am Tragbock (3) ein Träger (36) durch einen Antrieb (48a, 48b) vertikal verstellbar angeordnet ist, an den ein Heuer (5), insbesondere ein Kreiselheuer, oder eine Knickvorrichtung, wie ein Knickzetter, befestigbar ist, und daß sich eine Kardanwelle (23) zwischen dem Dreipunktbock (3) und dem Träger (36) erstreckt, an deren hinterem Ende eine Antriebswelle (41) des Heuers (5) oder der Knickvorrichtung angeschlossen bzw. anschließbar ist.

8. Vorrichtung nach Anspruch 7, **dadurch gekennzeichnet,** daß der Träger (36) Teil einer am oder vorzugsweise auf dem Dreipunktbock (3) unlösbar oder lösbar befestigten bzw. befestigbaren Tragkonstruktion (4) ist.

9. Vorrichtung nach Anspruch 8, **dadurch gekennzeichnet,** daß die Tragkonstruktion (4) ein insbesondere kastenförmiges Traggestell (25) aufweist, das vorzugsweise auf dem Dreipunktbock (3) befestigt bzw. befestigbar ist, und daß der Träger (36) gegenüber dem Traggestell (25) vertikal und vorzugsweise auch horizontal verstellbar am Traggestell (25) gehalten ist.

10. Vorrichtung nach Anspruch 9, **dadurch gekennzeichnet,** daß zwischen dem Traggestell (25) und dem Träger (36) mehrere, vorzugsweise drei Lenker (34) parallelogrammartig angeordnet sind, deren Enden raumgelenkig mit am hinteren Ende des Traggestells (25) angeordneten Gelenken (33) und raumgelenkig mit am Träger (36) angeordneten Gelenken (35) verbunden sind.

11. Vorrichtung nach Anspruch 10, **dadurch gekennzeichnet,** daß drei Lenker (34) vorgesehen sind, von denen zwei unten zu beiden Seiten und einer oben mittig angeordnet sind.

12. Vorrichtung nach einem oder mehreren der Ansprüche 8 bis 11, **dadurch gekennzeichnet**, daß zum Verstellen des Trägers (36) zwei synchron betreibbare Hydraulikzylinder (48a, 48b) vorgesehen sind, die um horizontale Achsen und vorzugsweise auch um vertikale Achsen schwenkbar bzw. raumgelenkig in Lageraugen (51, 52) abgestützt sind bzw. angreifen, und zwar einen Ends am Traggestell (25) und anderen Ends in einem Abstand vom vorderen Ende zweier seitlicher Lenker, insbesondere der unteren Lenker (34a, 34b).

13. Vorrichtung nach einem oder mehreren der Ansprüche 10 bis 12, **dadurch gekennzeichnet**, daß zum seitlichen Verstellen des Trägers (36) ein Hydraulikzylinder (53) vorgesehen ist, der in etwa horizontaler Anordnung zwischen dem Traggestell (25) und einem Lenker (34), vorzugsweise einem der beiden unteren Lenker (34a, 34b) raumgelenkig gehalten ist.

14. Vorrichtung nach Anspruch 13, **dadurch gekennzeichnet,** daß der Hydraulikzylinder (53) an einer vorzugsweise im unteren Bereich seitlich auskragenden Konsole (56) am Traggestell (25) abgestützt ist.

15. Vorrichtung nach einem oder mehreren der vorhergehenden Ansprüche, **dadurch gekennzeichnet,** daß der Träger ein Tragrahmen in Form eines gleichschenkligen oder gleichseitigen Dreiecks ist und die Ecken dieser dreieckigen Form nach oben und nach beiden Seiten weisen.

16. Vorrichtung nach einem oder mehreren der vorhergehenden Ansprüche, **dadurch gekennzeichnet**, daß vorzugsweise im mittleren Bereich des Trägers (36) ein Kardanwellenteil (37) drehbar gelagert ist, das an seinem vorderen Ende einen Kardanwellenanschluß (38) und an seinem hinteren Ende einen Kardanwellenanschluß (39) aufweist und durch ein teleskopierbares Kardanwellenteil (23) mit dem Kardanwellenteil (21) des Dreipunktbocks (3) verbunden ist.

17. Vorrichtung nach einem oder mehreren der vorhergehenden Ansprüche, **dadurch gekennzeichnet**, daß der Träger (36) eine Dreipunktaufhängung (42) für entsprechend ausgebildete Befestigungselemente des Heuers (5) oder der Knickvorrichtung aufweist.

18. Vorrichtung nach Anspruch 17, **dadurch gekennzeichnet**, daß die Dreipunktaufhängung (42) durch zwei untere, seitliche Fanghaken (43) und ein oben im mittleren Bereich angeordnetes Befestigungsteil mit Querlöchern gebildet ist.

19. Vorrichtung nach einem oder mehreren der Ansprüche 12 bis 18, **dadurch gekennzeichnet**, daß die Hydraulikzylinder (48a, 48b) in Reihe geschaltet sind und vorzugsweise jeweils zu beiden Seiten des Kolbens Kolbenstangen aufweisen.

20. Vorrichtung nach einem oder mehreren der Ansprüche 7 bis 19, **gekennzeichnet durch** einen dem Mähwerk vorgeordneten Schlepper (13) als Zugteil.

21. Vorrichtung nach Anspruch 20, **dadurch gekennzeichnet,** daß der Schlepper (13) mit einem vorzugsweise mittigen Frontmähwerk (2a), insbesondere Frontkreiselmähwerk, versehen ist.

22. Vorrichtung nach einem oder mehreren der vorhergehenden Ansprüche, **dadurch gekennzeichnet**, daß die Breite des Heuers (5) oder der Knickvorrichtung an die Breite des Mähers (2) bzw. der von ihm erzeugten Mahd oder an die Summe der Breiten des Heck- und Frontmähers (2, 2a) bzw. an das über deren Mahden gemessenes Maß angepaßt ist.

23. Vorrichtung nach Anspruch 21 oder 22, **dadurch gekennzeichnet,** daß dem seitlichen Heckmäher (2) eine eigene, vorzugsweise integrierte Knickvorrichtung (71) angeordnet ist und die vorzugsweise etwa mittig hinter dem Tragbock (3) gezogene Knickvorrichtung (72) an die Breite des Frontmähers (2a) bzw. der von ihm erzeugten Mahd angepaßt ist.

Fig. 1

Fig. 2

Fig.3

Fig. 4

Fig. 5

Europäisches
Patentamt

**EUROPÄISCHER RECHERCHENBERICHT**

Nummer der Anmeldung

EP    91 12 2216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 258 925 (VAN DER LELY)<br>* Zusammenfassung; Abbildungen *<br>--- | 1-4,7,8 | A01D43/04<br>A01D43/10<br>A01B51/04 |
| X,P | DE-U-9 016 694 (NIEMEYER)<br>* Seite 1, Zeile 15 - Seite 5, Zeile 4;<br>Abbildungen *<br>--- | 1-9 | |
| X | GB-A-2 014 026 (SPERRY RAND)<br>* Zusammenfassung; Abbildungen *<br>--- | 1,2,4 | |
| X | US-A-2 592 928 (MARTIN)<br>* Spalte 1, Zeile 1 - Zeile 12; Abbildung 1 *<br>--- | 3,4 | |
| A | FR-A-2 379 244 (TEXAS INDUSTRIES)<br>* Abbildungen *<br>--- | 9,10 | |
| A | DE-A-2 421 101 (KRONE)<br>* Abbildungen *<br>--- | 6 | |
| A | FR-A-2 375 814 (NEUSTADT)<br>* Abbildung 1 *<br>--- | 5 | **RECHERCHIERTE SACHGEBIETE (Int. Cl.5)** |
| A | FR-A-1 372 879 (PATENT CONCERN)<br>* Abbildungen *<br>----- | 1,3,7 | A01D<br>A01B |

Der vorliegende Recherchenbericht wurde für alle Patentansprüche erstellt

| Recherchenort | Abschlußdatum der Recherche | Prüfer |
|---|---|---|
| DEN HAAG | 13 APRIL 1992 | WALVOORT B.W. |